# EUROPÄISCHE PATENTSCHRIFT

(11) **EP 4 582 795 B1**
(45) Veröffentlichungstag und Bekanntmachung des Hinweises auf die Patenterteilung: **28.01.2026**
(21) Anmeldenummer: 25150511.1
(22) Anmeldetag: 07.01.2025
(51) Int. Cl.: G01N 21/89, G06T 7/00, G06V 10/12

(54) **ERKENNUNG VON STÖRSTELLEN AUF EINER HOMOGENEN FLÄCHE EINES BEWEGTEN OBJEKTS**
DETECTION OF DEFECTS ON A HOMOGENEOUS SURFACE OF A MOVING OBJECT
DÉTECTION DE DÉFAUTS SUR UNE SURFACE HOMOGÈNE D'UN OBJET EN MOUVEMENT

(30) Priorität: 08.01.2024 DE 102024100376
(43) Veröffentlichungstag der Anmeldung: 09.07.2025
(73) Patentinhaber: SICK AG, 79183 Waldkirch (DE)
(72) Erfinder: Müller, Romain, 79252 Stegen (DE); Reichert, Andreas, 79241 Ihringen (DE); Strohmeier, Dirk, 79312 Emmendingen (DE)

(56) Entgegenhaltungen:
- WO-A1-2023/046510
- WO-A1-2024/022571
- XU JIAMING ET AL: "Surface Quality Assurance Method for Lithium-Ion Battery Electrode Using Concentration Compensation and Partiality Decision Rules", IEEE TRANSACTIONS ON INSTRUMENTATION AND MEASUREMENT, IEEE, USA, vol. 69, no. 6, 29 July 2019 (2019-07-29), pages 3157 - 3169, XP011787721, ISSN: 0018-9456, [retrieved on 20200511], DOI: 10.1109/TIM.2019.2929670
- WANG YUANZE ET AL: "A Multi-target Tracking Algorithm for Fast-moving Workpieces Based on Event Camera", IECON 2021 - 47TH ANNUAL CONFERENCE OF THE IEEE INDUSTRIAL ELECTRONICS SOCIETY, IEEE, 13 October 2021 (2021-10-13), pages 1 - 5, XP034014135, DOI: 10.1109/IECON48115.2021.9589502

## Beschreibung

Die Erfindung betrifft ein Verfahren und eine Kameravorrichtung zur Erkennung von Störstellen auf einer homogenen Fläche eines Objekts während einer Bewegung des Objekts nach dem Oberbegriff von Anspruch 1 beziehungsweise 15.

Für die Bilderfassung wird herkömmlich in aller Regel ein CMOS-Bildsensor eingesetzt. Dieser nimmt mit einer bestimmten Aufnahmefrequenz Bilder auf und integriert dafür innerhalb einer Belichtungszeit alle Ladungen auf, die durch einfallende Photonen erzeugt werden. Bei einem bewegten Objekt stammen aber je nach Belichtungszeit die aufintegrierten Photonen eines Pixels nicht mehr vom selben Ort auf dem Objekt, und es entsteht Bewegungsunschärfe. Für die Erkennung von Störstellen stellt sich die besondere Herausforderung, dass die Aufnahmefrequenz schnell genug sein muss, damit eine Störstelle überhaupt registriert wird und nicht in der Bewegungsunschärfe verlorengeht, womit dann aber zumindest bei höheren Geschwindigkeiten der Objektbewegung keine ausreichenden Belichtungszeiten mehr möglich sind. Am ehesten ließe sich die Anwendung mit einer Zeilenkamera lösen, die eine Aufnahmefrequenz von mehreren hundert KHz erreicht. Eine Zeilenkamera hat aber nur ein sehr begrenztes Sichtfeld, und die Problematik der extrem kurzen Belichtungszeiten bleibt bestehen.

In jüngerer Zeit ist eine neuartige Kameratechnik entstanden, die sogenannte ereignis- oder eventbasierte Kamera. Sie wird in Anlehnung an Netzhaut und visuellen Cortex auch als neuromorphologische Kamera bezeichnet. In einer ereignisbasierten Kamera gibt es weder eine feste Bildwiederholrate noch ein gemeinsames Auslesen von Pixeln. Stattdessen prüft jedes Pixel für sich, ob es eine Änderung in der Intensität feststellt. Nur in diesem Fall wird eine Bildinformation erzeugt und ausgegeben beziehungsweise ausgelesen, und zwar nur von diesem Pixel. Jedes Pixel ist somit eine Art unabhängiger Bewegungsdetektor. Eine erfasste Bewegung oder sonstige Änderung der Intensität wird individuell oder asynchron als Ereignis gemeldet. Dadurch reagiert die ereignisbasierte Kamera äußerst schnell auf die Dynamik in der Szene. Aus den Ereignissen erzeugte Bilder sind für das menschliche Auge nicht so intuitiv zu erfassen, weil die statischen Bildanteile fehlen.

Eine ereignisbasierte Kamera wird beispielsweise in einem Whitepaper der Firma Prophesee beschrieben, das auf deren Intemetseite abgerufen werden kann. Aus der WO 2015/036592 A1, WO 2017/174579 A1 und WO 2018/073379 A1 sind jeweils Pixelschaltkreise für eine ereignisbasierte Kamera bekannt. In der EP 3 663 963 A1 wird eine ereignisbasierte Kamera zum Codelesen verwendet.

Der Stand der Technik beschreibt die Verwendung einer ereignisbasierten Kamera für die Erkennung von Störstellen auf einer homogenen Fläche eines bewegten Objekts nicht. Es genügt auch nicht, lediglich statt einer herkömmlichen Hochgeschwindigkeitskamera eine ereignisbasierte Kamera einzusetzen. Mit der ereignisbasierten Kamera könnten Ereignisse analog einer Belichtungszeit akkumuliert werden. Dann streuen wie bei herkömmlicher Bewegungsunschärfe die Ereignisse im Verlauf der Bewegung über das Sichtfeld und sind keiner Störstelle zuordenbar. Umgekehrt könnten die Ereignisse auf sehr kurzen Zeitskalen zu Bildern verarbeitet werden. Das emuliert eine herkömmliche Hochgeschwindigkeitskamera. Kleinere Störstellen würden dann lediglich isolierte Einzelereignisse erzeugen, die von Rauschereignissen nicht zu unterscheiden wären.

Die am 02.04.2025 veröffentlichte europäische Patentanmeldung EP 4 531 412 A1 offenbart eine Kameravorrichtung mit ereignisbasiertem Bildsensor zur Aufnahme eines Objektstroms. Die Ereignisse werden entsprechend einer seit einem Bezugszeitpunkt verstrichenen Zeit und der während der verstrichenen Zeit erfolgten Bewegung korrigiert, also gleichsam anhand der verstrichenen Zeit der Bewegung gegenläufig zurückgeführt, um so die Bewegungsunschärfe zu kompensieren. Eine Erkennung von Störstellen ist aber nicht vorgesehen.

Die US 11 138 742 B2 beschreibt eine ereignisbasierte Merkmalsverfolgung unter Bestimmung eines optischen Flusses. Das Vorgehen ist mathematisch sehr aufwändig, und erneut ist keine Erkennung von Störstellen beschrieben.

Weitere einschlägige Dokumente sind: die nach dem maßgeblichen Prioritätsdatum der vorliegenden Anmeldung veröffentlichte WO2024022571A1, die ein System und Verfahren zur Erkennung von Unregelmäßigkeiten an einem Objekt beschreibt; die WO2023046510A1, die ein Verfahren zum Trainieren eines maschinellen Lernmodells sowie eine programmierbare Hardwareeinheit offenbart; sowie die wissenschaftliche Veröffentlichung bei J. Xu et al. IEEE Transactions on Instrumentation and Measurement, Vol. 69, No. 6, June 2020: "Surface Quality Assurance Method for Lithium-Ion Battery Electrode Using Concentration Compensation and Partiality Decision Rules"(XP011787721).

Es ist daher Aufgabe der Erfindung, eine optische Erkennung von Störstellen auf einer homogenen Fläche eines bewegten Objekts zu verbessern.

Diese Aufgabe wird durch ein Verfahren und eine Kameravorrichtung zur Erkennung von Störstellen auf einer homogenen Fläche eines Objekts nach Anspruch 1 beziehungsweise 15 gelöst. Dafür wird ein Bild aufgenommen, wobei sogleich klar wird, dass erfindungsgemäß anfänglich ein Datensatz von Ereignissen aufgenommen und daraus erst später ein Bild erzeugt wird. Das Objekt befindet sich in einer Bewegung relativ zur Aufnahmeposition beziehungsweise der aufnehmenden Kameravorrichtung. Die Erwartung an das Objekt, das beispielsweise im Rahmen einer Qualitätsprüfung oder in einem Fertigungsprozess inspiziert wird, ist bevorzugt eine durchgehend homogene Fläche. Abweichungen von einer homogenen Fläche, die verschiedenste Ursachen wie Mikrorisse oder Partikel haben können, werden als Störstellen erkannt. Eine Auswertung ergibt, ob solche Störstellen vorhanden sind, und vorzugsweise an welchen Positionen.

Die Erfindung geht von dem Grundgedanken aus, das Bild mit einem ereignisbasierten Bildsensor aufzunehmen und in nacheinander erfassten Ereignissen die zwischenzeitliche Bewegung herauszurechnen. Ein ereignisbasierter oder neuromorphologischer Bildsensor weist eine Vielzahl von Pixelelementen beispielsweise in einer Zeilen- oder Matrixanordnung auf. Die Unterschiede zu einem herkömmlichen Bildsensor wurden einleitend kurz diskutiert: Die Pixelelemente erkennen jeweils Veränderungen in der Intensität, statt wie sonst üblich die jeweilige Intensität zu messen. Eine solche Veränderung, die vorzugsweise rasch genug sein und ein Rauschmaß übersteigen sollte, ist eines der namensgebenden Ereignisse. Zudem werden Signale nur bei einer solchen Veränderung in der Intensität bereitgestellt beziehungsweise ausgelesen, und zwar nur von dem betroffenen Pixel oder den betroffenen Pixeln.

Die Aufnahme erfolgt über ein Zeitintervall hinweg, das mindestens so lang ist, dass die Bewegung des Objekts innerhalb des Zeitintervalls eine mögliche Störstelle durch mehrere Pixelelemente führt. Die Pixelelemente, die eine ausreichende Intensitätsänderung wahrnehmen, lösen zu individuell unterschiedlichen Zeitpunkten entsprechende Ereignisse aus. Die Zeitpunkte werden ohne Beschränkung der Allgemeinheit als seit einem Bezugszeitpunkt verstrichene Zeit ausgedrückt. Der Bezugszeitpunkt ist im Prinzip beliebig, vorzugsweise der Beginn des Zeitintervalls. Eine abweichende Wahl des Bezugspunktes ist leicht korrigierbar, sie führt lediglich zu einer Verschiebung des entstehenden Bildes als Ganzes. Während der verstrichenen Zeit hat sich das Objekt weiterbewegt.

Um diese Bewegung in den Ereignissen zu kompensieren, wird ein jeweiliges Ereignis an den Ort zurückgerechnet, wo es sich zum Bezugszeitpunkt befand. Wird ein Bild aus den so korrigierten Ereignissen erzeugt, so entspricht das somit effektiv jedenfalls annähernd einer Aufnahme in Ruhe statt in Bewegung. Da aber die tatsächliche Aufnahme in Bewegung erfolgt, können die ereignisbasierten Pixelelemente auf Störstellen ansprechen, während in einer wirklichen Ruhelage außer reinem Rauschen auch an Störstellen keine Ereignisse entstehen würden.

Das Verfahren ist ein computerimplementiertes Verfahren, das beispielsweise in einer Recheneinheit einer Kamera und/oder einer an eine Kamera angeschlossenen Recheneinheit abläuft.

Die Erfindung hat den Vorteil, dass durch die ereignisbasierte Aufnahme noch kleinste Änderungen aufgrund von Störstellen erfasst werden. Die ereignisbasierte Technologie erlaubt die Inspektion von sich schnell bewegenden Objekten mit kontinuierlicher Datenaufnahme und sehr genauen Zeitstempeln. Aufgrund der erfindungsgemäßen Bewegungskompensation in der Auswertung der Ereignisse werden auch Einzelereignisse oder wenige Ereignisse kumuliert, wenn sie von einer Störstelle stammen und daher systematisch und nicht nur rauschbedingt zufällig auftreten, und dann in Summe doch noch erfassbar.

Das Objekt ist bevorzug eine Folie zur Herstellung einer Batterie. Der Begriff Batterie ist hier weit genug gefasst, um wiederaufladbare Batterien oder Akkus mit zu umfassen. Solche Folien erfüllen die Voraussetzung einer homogenen Fläche im ungestörten Fall. Zugleich sind unerkannte Störstellen für die gefertigte Batterie ein großes Problem, eine unzureichende Funktion der Folien führt zu Wärme- und Kapazitätsverlusten und im Extremfall sogar Bränden und Explosionen.

Das Objekt ist bevorzugt eine Anodenfolie, eine Kathodenfolie oder eine Separatorfolie. Somit können sämtliche für die Fertigung von Batterien relevanten Folien auf Störstellen geprüft werden. Vorteilhafterweise werden mehrere oder alle Typen von Folien bereits während der Herstellung auf Störstellen geprüft, insbesondere direkt im Fertigungsprozess, so dass auf die Störstellen zurückgehende Defekte von Vorneherein vermieden sind.

Vorzugsweise werden als Störstellen Partikel bereits in der Größenordnung der Dicke der Folie erkannt, insbesondere Partikel ab einem Durchmesser von höchstens der halben Dicke der Folie. Größere Störstellen werden damit erst recht erkannt, die Herausforderung besteht in der Erkennung kleinster Strukturen. Die Größenordnung bedeutet wie üblich einen zulässigen Faktor n oder 1/n mit n<10 zu der Dicke der Folie, also beispielsweise doppelte oder dreifache Dicke. Die halbe Dicke hat insofern eine besondere Bedeutung, als noch kleinere Partikel eine Folie nicht mehr durchdringen können und daher entsprechende Störstellen nicht unbedingt erfasst werden müssen. In absoluten Zahlen bedeuten diese Angaben für typische Folien, insbesondere Batteriefolien, eine Größenordnung von einigen Mikrometern, beispielsweise 5 µm, 10 µm, 15 µm oder 20 µm.

Vorzugsweise werden Unterseite und Oberseite der Folie aufgenommen und auf Störstellen geprüft. Störstellen werden somit beidseitig erkannt. Dafür werden vorzugsweise zwei Bildsensoren oder Kameras eingesetzt, wobei auch Spiegelkonstruktionen im Zusammenhang mit einem zweigeteilten Sichtfeld eines einzigen Bildsensors denkbar sind.

Das Objekt wird bevorzugt für das Aufnehmen des Bildes in mehreren Beleuchtungszonen unterschiedlich beleuchtet. Dazu sind vorzugsweise mehrere Beleuchtungseinheiten oder mehrere Module einer Beleuchtungseinheit vorgesehen. Das Sichtfeld des Bildsensors ist damit in die unterschiedlichen Beleuchtungszonen aufgeteilt. Dadurch können Störstellen in unterschiedlichen Beleuchtungsszenarien und somit einer noch geringeren Fehlerrate erkannt werden. Die Beleuchtungszonen sind vorzugsweise untereinander überlappungsfrei, ansonsten entstehen in den Überlappungsbereichen effektiv einfach weitere Beleuchtungszonen durch die Überlagerung von Licht. Überlappungsbereiche können je nach Ausführungsform in der Auswertung als solche berücksichtigt oder daraus ausgeschlossen werden. Der Vorteil der Beleuchtungszonen ist, dass diese gleichzeitig erzeugt werden können. Bei einer vollständigen Ausleuchtung könnte die Beleuchtung nur sequentiell variiert werden, womit aber die Aufnahme in unterschiedlichen Stadien der Bewegung erfolgt. Dennoch ist nicht ausgeschlossen, dass Beleuchtungszonen beziehungsweise Beleuchtungseinheiten oder -module in einem zeitlichen Muster aktiviert werden.

Vorzugsweise werden korrigierte Ereignisse jeweils nur innerhalb einer selben Beleuchtungszone gesammelt. Das ist einfach umsetzbar, da die Pixelelemente des Bildsensors auf einen bestimmten Ort gerichtet sind und somit einer Beleuchtungszone zugeordnet werden können. Ohne diese Zuordnung würden sich die unterschiedlichen Beleuchtungsszenarien durchmischen. Auch mit solchen Mittelungseffekten kann eine Aufteilung in Beleuchtungszonen hilfreich sein, jedoch wird das beste Ergebnis erzielt, wenn die Beleuchtungsszenarien einzeln ausgewertet werden. Durch die Möglichkeit, Beleuchtungszonen gleichzeitig zu aktivieren, ist dies ohne Zeitverlust möglich.

Die Beleuchtungszonen unterscheiden sich vorzugsweise voneinander in mindestens einer der folgenden Beleuchtungseigenschaften: Auflicht oder Durchlicht, Polarisation, Intensität, Spektrum, Einfallswinkel, Beleuchtungsmuster. Dies ist durch entsprechende Eigenschaften von Beleuchtungseinheiten oder -modulen erreichbar. Eine Erfassung im Auflicht erfolgt vorzugsweise von beiden Seiten. Bei Durchlicht ist das selten erforderlich, aber immerhin denkbar, weil eine Störstelle diesseits oder jenseits eines teiltransparenten Objekts schon einen unterschiedlichen Effekt ergeben kann. Durch Variation in den anderen genannten Lichteigenschaften werden Störstellen verschiedenster Art sichtbar gemacht, so dass insgesamt die Erkennungsrate profitiert.

Das Zeitintervall entspricht vorzugsweise der Dauer, innerhalb derer sich die homogene Fläche durch eine Beleuchtungszone oder das ganze Sichtfeld des Bildsensors bewegt. Damit kann die maximale Anzahl von Ereignissen erfasst werden, nämlich diejenige in einem selben Beleuchtungsszenario oder insgesamt. Auch das verbessert die Erkennungsrate für Störstellen.

Die während des Zeitintervalls erfolgende Bewegung wird vorzugsweise durch eine Parametrierung vorgegeben, mittels eines zusätzlichen Sensors gemessen oder aus den Ereignissen bestimmt. Mittels Parametrierung lässt sich eine fest vorgegebene Bewegung kompensieren, beispielsweise durch Angabe einer Geschwindigkeit einer gleichförmigen Bewegung, wobei auch komplexere Bewegungen parametrierbar sind. Es ist dabei denkbar, die Parameter der Bewegung aus Einstellungen einer Fördereinrichtung zu übernehmen, die das aufzunehmende Objekt bewegt oder beispielsweise eine Folie ab- oder aufrollt. Die Messung mit einem zusätzlichen Sensor, beispielsweise einem Inkrementalgeber an einer Fördereinrichtung, bedeutet etwas mehr Aufwand, ist aber dafür flexibler und anpassungsfähiger. Eine dritte Möglichkeit besteht darin, die Bewegung aus den Messdaten des Bildsensors, nämlich den Ereignissen zu bestimmen. In diesem Fall gibt es keine Vorgaben oder zusätzlichen Informationen über die Bewegung, die vielmehr eigenständig geschätzt wird. Dadurch müssen keine Schnittstellen geschaffen werden, und es ist wie bei der Messung mit einem zusätzlichen Sensor sichergestellt, dass die tatsächliche und nicht eine nur gewünschte oder spezifizierte Bewegung berücksichtigt wird.

Vorzugsweise bewegt sich das Objekt nur in eine Richtung. Das ist ein häufiger Anwendungsfall und vereinfacht die Korrektur der Ereignisse erheblich. Die Bewegung erfolgt insbesondere gleichförmig, also mit konstanter Geschwindigkeit. Das Anwendungsbeispiel einer Fördereinrichtung oder des Auf- oder Abrollens von Folien wurde bereits genannt, hier ist die Bewegung bis auf gelegentliche Umschaltvorgänge in aller Regel gleichförmig. Die Geschwindigkeit beträgt einige Meter pro Sekunde, liegt beispielsweise im Intervall von 0,5-1,5 m/s entsprechend einer typischen Fördergeschwindigkeit beziehungsweise Laufgeschwindigkeit einer Folie.

Der Bildsensor ist vorzugsweise mit den Zeilen oder Spalten der Pixelelemente in Richtung der Bewegung ausgerichtet. Die Kamera wird also so zum Objektstrom angebracht, dass die Bewegung entlang der Zeilen oder Spalten der Pixelelemente des Bildsensors verläuft. Das erleichtert die weitere Verarbeitung und vermeidet Diskretisierungsartefakte.

Die Ereignisse werden bevorzugt nach der Vorschrift *Xₙ* = *X* - *v * dT* korrigiert, mit *X* Position des das Ereignis auslösenden Pixelelements, *Xₙ* neue Position, *v* Geschwindigkeit der Bewegung und *dT* seit dem Bezugszeitpunkt verstrichene Zeit. Dabei ist die Richtung der Bewegung ohne Beschränkung der Allgemeinheit als X-Richtung bezeichnet, das ließe sich immer durch eine einfache Drehung erreichen, wenn die Richtung der Bewegung nicht mit den Zeilen des Bildsensors übereinstimmt. In Y-Richtung ist damit keine Korrektur erforderlich, weil sich der Objektstrom in diese Richtung nicht bewegt. Die Einheiten sind wählbar, beispielsweise entsprechen die Positionen der Pixelposition auf dem Bildsensor, die verstrichene Zeit ist in Sekunden und die Geschwindigkeit ist in Pixel/Sekunde angegeben.

Für die Korrektur entsprechend der seit einem Bezugszeitpunkt verstrichenen Zeit und der während der verstrichenen Zeit erfolgten Bewegung werden bevorzugt die Ereignisse selbst ausgewertet, ohne daraus zunächst ein Bild zusammenzusetzen, und erst abschließend nach der Korrektur werden die korrigierten Ereignisse in einem Bild gesammelt, das dann hinsichtlich der Störstellen ausgewertet wird. Ereignisse treten bei Aufnahme einer homogenen Fläche nur selten auf. Daher ist es sinnvoll, die Auswertung möglichst lange auf Ebene der Ereignisse zu halten (sparse data, sparse evaluation). Es ist sogar vorstellbar, auch die Störstellen auf dieser Ebene der Ereignisse zu finden, beispielsweise als Anhäufung von Ereignissen, und somit nie ein Bild zusammenzusetzen. Allerdings ist dadurch der Weg versperrt, auf bewährte Bildauswertungen zurückzugreifen.

Das Bild wird bevorzugt mit einem Verfahren des maschinellen Lernens, insbesondere einem neuronalen Netz ausgewertet, ob es Störstellen aufweist. Die größere Herausforderung bei der Erkennung kleiner Störstellen ist es, optisch genügend Information zu erhalten. Liegt einmal dank der Erfindung ein Bild vor, in dem die Störstellen sichtbar sind, dann kann für die abschließende Erkennung der Störstellen auf Verfahren zurückgegriffen werden, die sich auch für herkömmlich aufgenommene Bilder eignen. Mit maschinellem Lernen ist das besonders flexibel möglich, wobei bevorzugt ein neuronales Netz oder noch bevorzugter ein tiefes Faltungsnetz zum Einsatz kommt. Für das Training eignet sich insbesondere ein überwachtes Lernen mit annotierten oder gelabelten Trainingsdaten. Dazu werden beispielsweise Objekte der zu untersuchenden Art präsentiert, also insbesondere Folien, und dazu wird jeweils von außen eine Bewertung vorgegeben, ob, und gegebenenfalls wo es Störstellen gibt. Das Verfahren des maschinellen Lernens kann dann im späteren Betrieb generalisieren.

Auch klassische Bildauswertung ist möglich. Es ist zu erwarten, dass das Bild weitgehend leer ist, jedenfalls nach Anwendung einer Rauschschwelle, da die homogene Fläche ohne Störstellen keine Ereignisse auslöst. Es kann also nach Clustern von Ereignissen gesucht werden, in denen eine Mindestanzahl von Ereignissen an einem Pixel des entstandenen Bildes erfasst wurden, und/oder mit der Forderung, dass an einer Mindestanzahl von benachbarten Pixeln in dem Bild Ereignisse erfasst sind. Zu beachten ist, dass in diesem Zusammenhang Pixel die Bildpunkte in dem aus den korrigierten Ereignissen erzeugten Bild gemeint sind, die nicht mit den Pixelelementen verwechselt werden dürfen, die die Ereignisse ausgelöst haben.

Ein Ereignis weist bevorzugt jeweils Koordinateninformationen des zugehörigen Pixelelements, eine Zeitinformation und/oder eine Intensitätsinformation auf. Ein herkömmlicher Datenstrom eines Bildsensors besteht aus den Intensitäts- oder Grauwerten der Pixel, und der Ortsbezug in der Bildsensorebene entsteht dadurch, dass sämtliche Pixel in geordneter Abfolge ausgelesen werden. Bei dem ereignisbasierten Bildsensor werden stattdessen vorzugsweise Datentupel je Ereignis ausgegeben, die das Ereignis zuordenbar machen. Dabei werden vorzugsweise der Ort des zugehörigen Pixelelements, wie etwa dessen X-Y-Position auf dem Bildsensor, die Polarität oder Richtung ±1 der Intensitätsänderung beziehungsweise die zum Ereignis gemessene Intensität und/oder ein Zeitstempel festgehalten. Dadurch müssen trotz der hohen effektiven Bildwiederholrate nur sehr wenige Daten ausgelesen werden.

Der ereignisbasierte Bildsensor erzeugt Bildinformationen bevorzugt mit einer Aktualisierungsfrequenz von mindestens einem KHz oder sogar mindestens zehn KHz und mehr. Die Aktualisierungsfrequenz einer herkömmlichen Kamera ist die Bildwiederholfrequenz oder Framerate. Eine solche gemeinsame Bildwiederholfrequenz kennt eine ereignisbasierte Kamera nicht, da die Pixelelemente ihre Bildinformationen einzeln und ereignisbasiert ausgeben oder auffrischen. Dabei gibt es extrem kurze Ansprechzeiten, die mit einer herkömmlichen Kamera nur zu immensen Kosten mit tausend oder mehr Bildern pro Sekunde erreichbar wären, bei einer ereignisbasierten immer noch möglichen noch höheren Aktualisierungsfrequenz wäre das mit herkömmlichen Kameras technisch nicht mehr darstellbar.

Ein jeweiliges Pixelelement stellt bevorzugt fest, wenn sich die von dem Pixelelement erfasste Intensität ändert, und erzeugt genau dann ein Ereignis. Das drückt nochmals in anderen Worten das besondere Verhalten der Pixelelemente einer ereignisbasierten Kamera beziehungsweise eines ereignisbasierten Bildsensors aus, das bereits mehrfach angesprochen wurde. Das Pixelelement prüft, ob sich die erfasste Intensität verändert. Nur das ist ein Ereignis, und nur bei einem Ereignis wird eine Bildinformation ausgegeben oder ausgelesen. Es ist eine Art Hysterese denkbar, bei der das Pixelelement eine definierte, zu geringfügige Änderung der Intensität noch ignoriert und nicht als Ereignis auffasst.

Das Pixelelement liefert vorzugsweise als Bildinformation eine differentielle Information, ob sich die Intensität verringert oder erhöht hat. Eine aus dem Pixelelement gelesene Bildinformation ist also beispielsweise eine Polarität, ein Vorzeichen +1 oder -1 je nach Änderungsrichtung der Intensität. Dabei kann eine Schwelle für Intensitätsänderungen gesetzt sein, bis zu denen das Pixelelement noch kein Ereignis auslöst. Auch die Dauer einer Intensitätsänderung kann eine Rolle spielen, indem beispielsweise der Vergleichswert für die Schwelle mit einer gewissen Abklingzeit nachgezogen wird. Eine zu langsame Veränderung löst dann kein Ereignis aus, auch wenn in Summe, über ein gegenüber der Abklingzeit längeres Zeitfenster, die Intensitätsänderung über der Schwelle lag.

Als Alternative zu einem differenziellen ereignisbasierten Bildsensor ist auch eine integrierende Variante vorstellbar. Dann liefert das Pixelelement als Bildinformation eine integrierte Intensität in einem durch eine Änderung der Intensität bestimmten Zeitfenster. Hier beschränkt sich die Information nicht auf eine Richtung der Intensitätsänderung, sondern es wird in einem durch das Ereignis festgelegten Zeitfenster das einfallende Licht integriert und dadurch ein Grauwert bestimmt. Der Messwert entspricht damit demjenigen einer herkömmlichen Kamera, aber der Zeitpunkt der Erfassung bleibt ereignisbasiert und an eine Intensitätsänderung gekoppelt.

Die erfindungsgemäße Kameravorrichtung zur Erkennung von Störstellen auf einer homogenen Fläche eines Objekts, insbesondere einer Folie, während einer Bewegung des Objekts relativ zu der Kameravorrichtung weist einen ereignisbasierten Bildsensor auf, ist somit eine ereignisbasierte oder neuromorphologische Kamera und folglich keine herkömmliche Kamera mit herkömmlichem Bildsensor. Eine Steuer- und Auswertungseinheit der Kameravorrichtung führt eine der Ausführungsformen des erfindungsgemäßen Verfahrens aus. Die Steuer- und Auswertungseinheit kann in die Kamera integriert oder extern oder eine Mischform aus beidem sein.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Kamera in einer Anwendung über einer bewegten Folie;
- Fig. 2: eine schematische Darstellung eines zeitabhängigen Intensitätsverlaufs zur Erläuterung des Funktionsprinzips einer ereignisbasierten Kamera;
- Fig. 3: ein beispielhaftes Orts-Zeit-Diagramm aus Ereignissen; und
- Fig. 4: eine schematische Darstellung zur Erläuterung einer Beleuchtung mit mehreren Beleuchtungszonen.

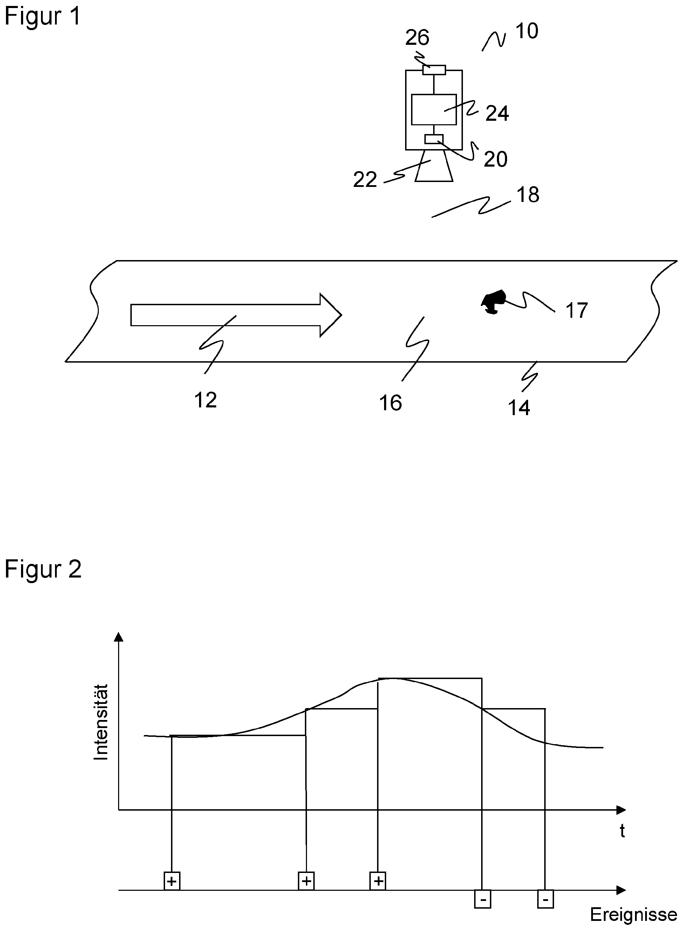

Figur 1 zeigt eine Kamera 10, die ein in einer Richtung 12 bewegtes Objekt 14 mit einer homogenen Fläche 16 innerhalb ihres Sichtfeldes 18 aufnimmt. In diesem Beispiel ist das Objekt 14 eine Folie und insbesondere eine Batteriefolie, die mit nicht mehr gezeigten Mitteln bewegt beziehungsweise auf- oder abgerollt wird. Alternativ sind Objekte 14 auf einem Förderband oder sonstige bewegte Objekte 14 vorstellbar. Durch den Einsatz zusätzlicher Kameras und/oder von Spiegeln und dergleichen können auch breitere Objekte 14 beziehungsweise andere Flächen wie die Unterseite des Objekts 14 erfasst werden. Die Inspektion des Objekts 14 mit der Kamera 10 hat zum Ziel, in der homogenen Fläche 16 mögliche Störstellen 17 zu erkennen beziehungsweise bevorzugt auch zu lokalisieren. Die in Figur 1 gezeigte Störstelle 17 hat eine aus Darstellungsgründen weit übertriebene Größe.

Die Kamera 10 erfasst mit einem Bildsensor 20 über ein nur rein schematisch gezeigtes Objektiv 22 jeder an sich bekannten Bauart Bildinformationen des bewegten Objekts 14. Der Bildsensor 20 umfasst in der Regel eine Matrix- oder Zeilenanordnung von Pixeln und ist ein ereignisbasierter Bildsensor. Im Gegensatz zu einem herkömmlichen Bildsensor werden dabei in den jeweiligen Pixeln nicht Ladungen über ein gewisses Integrationsfenster gesammelt und dann die Pixel gemeinsam als Bild ausgelesen, sondern von den einzelnen Pixeln Ereignisse ausgelöst und weitergegeben, wenn sich in deren Sichtfeld eine Intensitätsänderung ergibt. Später wird das Prinzip eines ereignisbasierten Bildsensors unter Bezugnahme auf die Figur 2 noch näher erläutert.

Mit dem Bildsensor 20 ist eine Steuer- und Auswertungseinheit 24 verbunden, die dessen Aufnahmen steuert, die jeweiligen Ereignisse ausliest und weiterverarbeitet. Die Steuer- und Auswertungseinheit 24 weist mindestens einen digitalen Rechenbaustein auf, wie mindestens einen Mikroprozessor, mindestens ein FPGA (Field Programmable Gate Array), mindestens einen DSP (Digital Signal Processor), mindestens ein ASIC (Application-Specific Integrated Circuit), mindestens eine VPU (Video Processing Unit) oder mindestens einen Neural Processor. Die Steuer- und Auswertungseinheit 24 kann überdies zumindest teilweise extern der Kamera 10 vorgesehen sein, etwa in einer übergeordneten Steuerung, einem angeschlossenen Netzwerk, einem Edge-Device oder einer Cloud.

Über eine Schnittstelle 26 gibt die Kamera 10 Informationen aus, wie Bilddaten oder daraus gewonnene Auswertungsergebnisse, also insbesondere das Nichtvorliegen oder Vorliegen einer Störstelle 17 vorzugsweise samt Position. Sofern die Funktionalität der Steuer- und Auswertungseinheit 24 zumindest teilweise außerhalb der Kamera 10 vorgesehen ist, kann die Schnittstelle 26 für die dafür notwendige Kommunikation genutzt werden. Umgekehrt kann die Kamera 10 über die Schnittstelle 26 oder eine weitere Schnittstelle Informationen von weiteren Sensoren oder einer übergeordneten Steuerung erhalten. Dadurch ist beispielsweise möglich, eine feste oder mittels nicht gezeigtem zusätzlichem Sensor gemessene aktuelle Geschwindigkeit der Bewegung des Objekts 14 an die Kamera 10 zu übermitteln oder Geometrieinformationen über die Objekte 14 zu erhalten, insbesondere deren Abstand zur Kamera 10 für eine Fokus- oder sonstige Einstellung des Objektivs 22. Die Kamera 10 kann weitere Elemente enthalten oder an weitere Komponenten angeschlossen sein, beispielsweise an einen Sensor wie eine Lichtschranke oder einen Lichttaster, über den ein Aufnahmebeginn oder Aufnahmeende getriggert wird.

Wenn das zu inspizierende Objekt 14 eine nicht transparente Folie ist, wird vorzugsweise von beiden Seiten erfasst, um auch Störstellen 17 auf der Unterseite zu erkennen. Eine transparente Folie kann in einem Durchlichtverfahren erfasst werden. Speziell im Falle der Batterieproduktion gibt es drei Folienarten, die geprüft werden können: Die Kathodenfolie, die Anodenfolie und die Separatorfolie. Um alle Störstellen 17 zu finden, sind hier vorzugsweise sechs homogene Flächen 16 zu prüfen, nämlich die Ober- und Unterseiten aller drei Folienarten. Dies geschieht vorzugsweise rechtzeitig im Rahmen der Fertigung, so dass die fertigen Batterien nur Folien ohne Störstellen 17 aufweisen. Eine typische Größe der aufzufindenden Störstellen 17 ist 5 um entsprechend der halben Dicke einer Separatorfolie, bei Bewegungsgeschwindigkeiten von 0,5-1,5 m/s. Sind zur Abdeckung eines breiteren Objekts 14 oder für zusätzliche Perspektiven beispielsweise von der Unterseite mehrere Kameras 10 erforderlich, so kann die Funktionalität der Steuer- und Auswertungseinheit 24 nahezu beliebig verteilt werden. Es sei noch erwähnt, dass Schnittkanten auf die gleiche Art und Weise inspiziert werden können.

Figur 2 zeigt zur Erläuterung des Funktionsprinzips des ereignisbasierten Bildsensors 20 im oberen Teil einen rein beispielhaften zeitlichen Intensitätsverlauf in einem Pixelelement des Bildsensors 20. Ein herkömmlicher Bildsensor würde diesen Intensitätsverlauf über ein vorgegebenes Belichtungszeitfenster integrieren, die integrierten Werte aller Pixelelemente würden im Takt einer vorgegebenen Framerate ausgegeben und dann für das nächste Bild zurückgesetzt.

Das Pixelelement des ereignisbasierten Bildsensors 20 reagiert stattdessen individuell und unabhängig von einer Framerate auf eine Intensitätsänderung. Mit senkrechten Strichen sind jeweils Zeitpunkte markiert, zu denen eine Intensitätsänderung festgestellt wurde. Im unteren Teil der Figur 2 sind zu diesen Zeitpunkten Ereignisse mit Plus und Minus je nach Richtung der Intensitätsänderung dargestellt. Es ist denkbar, dass das Pixelelement nicht auf jegliche Intensitätsänderung reagiert, sondern erst, wenn eine gewisse Schwelle überschritten wird. Weitergehend kann verlangt sein, dass die Schwelle innerhalb eines bestimmten Zeitfensters überschritten wird. Vergleichswerte früherer Intensitäten jenseits des Zeitfensters werden dann gleichsam vergessen. Durch Schwelle und/oder Zeitfenster lässt sich ein Pixelelement vorteilhafterweise schon individuell zumindest grob auf die Erkennung von Blitzen konfigurieren.

Die von einem Pixelelement erzeugten Ereignisse werden individuell zum Zeitpunkt des Ereignisses oder vorzugsweise in Auslesezyklen der Dauer dt ausgelesen und damit an die Steuer- und Auswertungseinheit 24 übertragen. Dabei ist die Zeitauflösung keineswegs auf dt begrenzt, da das Pixelelement das jeweilige Ereignis mit einem beliebig feinen Zeitstempel versehen kann. Die durch dt festgelegten Zyklen sind auch ansonsten nicht mit einer herkömmlichen Framerate zu vergleichen. Herkömmlich bedeutet eine höhere Framerate eine direkt linear heraufskalierte Datenmenge durch die zusätzlichen Bilder. Bei dem ereignisbasierten Bildsensor 20 hängt die zu übertragende Datenmenge von dt bis auf einen gewissen Verwaltungsoverhead nicht ab. Wird nämlich dt kürzer gewählt, so sind je Auslesezyklus auch weniger Ereignisse zu verarbeiten. Die Datenmenge bestimmt sich durch die Anzahl der Ereignisse und ist damit weitgehend unabhängig von dt.

Neben differenziellen ereignisbasierten Kameras gibt es auch integrierende ereignisbasierte Kameras. Sie reagiert ganz analog auf Intensitätsänderungen. Anstelle einer Ausgabe der Richtung der Intensitätsänderung wird aber in einem durch das Ereignis vorgegebenen Zeitfenster das einfallende Licht integriert. Dadurch entsteht ein Grauwert. Differenzielle und integrierende ereignisbasierte Kameras haben einen unterschiedlichen Hardwareaufbau, und die differenzielle ereignisbasierte Kamera ist schneller, da sie kein Integrationszeitfenster benötigt. Zur Technologie einer ereignisbasierten Kamera wird erneut ergänzend auf die einleitend genannte Patentliteratur und wissenschaftliche Literatur verwiesen.

Die Bildinformation des ereignisbasierten Bildsensors 20 ist kein Bild, sondern eine Ereignisliste. Ein jeweiliges Ereignis wird beispielsweise als Tupel mit dem Vorzeichen der Intensitätsänderung bei einer differentiellen ereignisbasierten Kamera beziehungsweise einem Grauwert bei einer integrierenden ereignisbasierten Kamera, der Pixelposition auf dem Bildsensor 20 in X- und Y-Richtung und einem Zeitstempel ausgegeben. Die nun beschriebene Korrektur von Ereignissen für eine zwischenzeitliche Bewegung kann zunächst auf Ebene von Ereignissen oder Ereignislisten erfolgen. Ein Bild im herkömmlichen Sinne für eine Störstellenerkennung wird vorzugsweise erst abschließend aus den bereits korrigierten Ereignissen erzeugt.

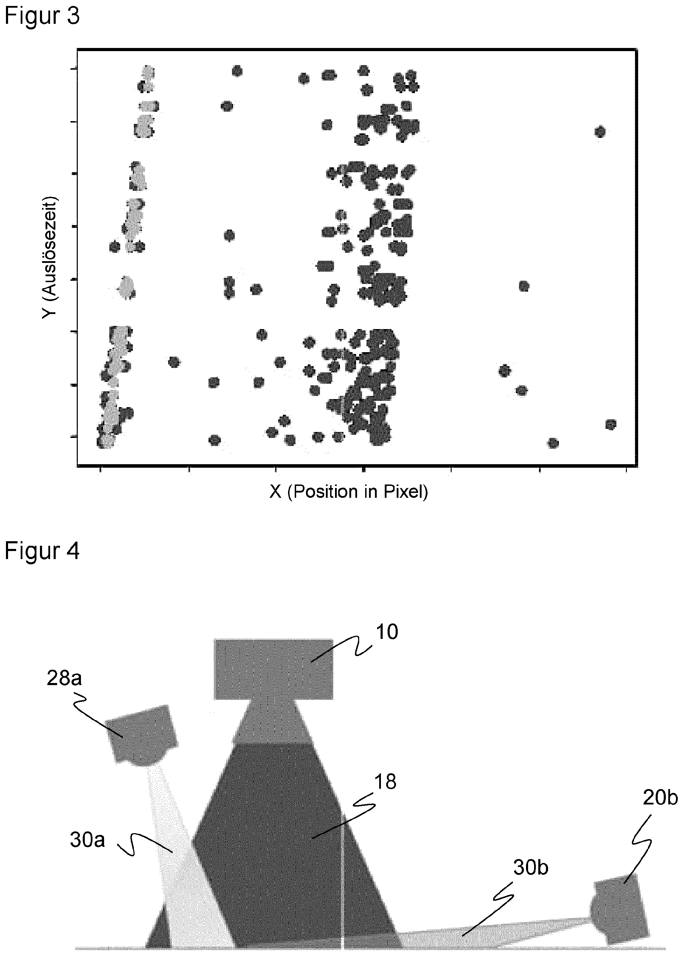

Figur 3 zeigt ein beispielhaftes Orts-Zeit-Diagramm aus Ereignissen einiger beispielhaft herausgegriffener Pixelelemente des Bildsensors 20, die in Richtung 12 der Bewegung zueinander benachbart sind. Auf der X-Achse ist die Position des jeweils ein Ereignis auslösenden Pixels aufgetragen, wobei die X-Richtung ohne Beschränkung der Allgemeinheit die Zeilenrichtung und die Bewegungsrichtung ist. Die Y-Achse ist die Zeitachse. Ein jeweiliger Punkt in dem Orts-Zeit-Diagramm entspricht damit einem Ereignis in einem Pixel an Position X zum Auslösezeitpunkt t. Das gezeigte Orts-Zeit-Diagramm dient der Veranschaulichung, die Steuer- und Auswertungseinheit 24 kann ebenso direkt mit Ereignislisten oder in beliebiger sonstiger Repräsentation arbeiten.

Eine Störstelle 17 löst im Laufe ihrer Bewegung nacheinander Ereignisse in benachbarten Pixeln aus. In Figur 3 ist die Störstelle 17 so klein, dass jeweils nur ein Pixel zur selben Zeit auslöst. Bei gleichförmiger Bewegung ergibt sich eine Gerade in dem Orts-Zeit-Diagramm, die zur Veranschaulichung durch hellere Punkte hervorgehoben ist. Die Steigung dieser Geraden ist der Geschwindigkeit der gleichförmigen Bewegung proportional beziehungsweise in den gewählten Einheiten der Achsen gleich der Geschwindigkeit. Aus dieser Geraden kann die Bewegungsgeschwindigkeit geschätzt werden, die alternativ vorgegeben oder von einem zusätzlichen Sensor gemessen wird. Damit die Steigung der Geraden oder eine sonstige Geschwindigkeitsinformation für die weiteren Schritte erfassbar und nutzbar ist, sollte noch eine Kalibrierung vorgenommen werden. Für ein Objektiv 22 mit starker geometrischer Verzerrung ist möglicherweise eine nichtlineare Kalibrierung mittels Polynomfit oder dergleichen erforderlich. Zur Berücksichtigung verschiedener Geschwindigkeiten können mehrere Kalibrierungen beziehungsweise im nicht-linearen Fall Interpolationen vorgenommen werden.

Die Kenntnis der Geschwindigkeit beispielsweise in der Einheit Pixel/s ermöglicht nun, die Bewegung der Störstelle 17 in den aufgenommenen Ereignissen zu korrigieren. Bildlich gesprochen sollen die Ereignisse anhand der bekannten zwischenzeitlichen Bewegung auf einen gemeinsamen Bezugszeitpunkt umgerechnet werden. Der Bezugszeitpunkt ist im Folgenden ohne Beschränkung der Allgemeinheit der Beginn eines Zeitintervalls, in dem Ereignisse für eine Bildaufnahme gesammelt werden. Diese Wahl ist letztlich frei und nicht sonderlich erheblich, da ein abweichender Bezugszeitpunkt lediglich einen gemeinsamen Versatz des gesamten bewegungskompensierten Bildes erzeugt.

Es kann dann je Ereignis der bisherige Wert X des Ereignisses in einen korrigierten Wert *Xₙ* umgerechnet werden, nach der Vorschrift *Xₙ = X* - *v* * *dT.* Dabei ist *v* die insbesondere als Steigung bestimmte Geschwindigkeit vorzugsweise in der Einheit Pixel/s und *dT* die laut Auslösezeitpunkt des betrachteten Ereignisses seit dem Bezugszeitpunkt verstrichene Zeit. In Y-Richtung ist nichts zu korrigieren, da die Bewegung in X-Richtung erfolgt. Der Auslösezeitpunkt des Ereignisses ist nach dieser Umrechnung zumindest für das erfindungsgemäße Verfahren nicht länger von Interesse, stünde aber natürlich für andere Auswertungen noch zur Verfügung.

In etwas vollständigerer Notation sei ein Ereignis e zu einem Zeitpunkt t an Position (x, y) des Bildsensors 20 betrachtet, das die Polarität p aufweist. Das Ereignis wird gemäß der obigen Rechenvorschrift entsprechend der Geschwindigkeit v transformiert: *e*(*t, xₙ, y, p*) *= e*(*t, x* - v * *dT, y, p*). Dieser Transformation werden alle Ereignisse unterworfen. Für zumindest einige der dafür erforderlichen Rechenschritte, die häufig durchzuführen, in sich nicht sonderlich komplex und leicht zu parallelisieren sind, eignet sich insbesondere ein FPGA. Die neue x-Koordinate ist in der Regel nicht ganzzahlig und kann dann gerundet werden. Aus Implementierungssicht insbesondere in einem FPGA kann es vorteilhaft sein, nicht mit Fließkommazahlen zu rechnen, sondern ein Format mit fixen Nachkommastellen zu wählen und Rundungen und dergleichen über Bit-Schiebe-Operationen umzusetzen.

Die auf diese Weise korrigierten Ereignisse können nun anhand ihrer (x,y)-Koordinaten in einer Matrix gesammelt werden, das Ergebnis entspricht dann einem herkömmlichen Bild. Dank der Korrektur für die Bewegung tragen Ereignisse, die eine Störstelle 17 ausgelöst hat, an gleichen Orten zu den Pixeln dieses Bildes bei. Dadurch werden auch kleine oder schlecht sichtbare Störstellen 17 erkennbar. Eine derartige Störstelle 17 löst nicht unbedingt in jedem Pixelelement des Bildsensors 20 ein Ereignis aus. Im Verlauf der Bewegung gelangt die Störstelle 17 aber nacheinander in das Sichtfeld 18 von beispielsweise 720 Pixelelementen einer Bildsensorzeile, wenn man ohne Beschränkung der Allgemeinheit eine Ausrichtung der Bewegung in Zeilenrichtung des Bildsensors 20 unterstellt. Selbst eine schlecht erkennbare Störstelle 17, die beispielsweise nur jedes 10te mal in einem Pixelelement ein Ereignis auslöst, kumuliert sich dann zu einem Gesamtsignal von 72, und das ist deutlich unterscheidbar von einem Rauschen. Die Korrektur der Bewegung sorgt dafür, dass dieses Gesamtsignal kumulierbar wird, im Gegensatz zu den zuvor sehr dünn verteilten Einzelereignissen in jedem 10ten Pixel des Rechenbeispiels, die noch unterhalb der Rauschgrenze liegen.

In dem soeben erläuterten Beispiel wurde implizit unterstellt, dass jedes Ereignis mit einer Polarität +1 beiträgt, die Ereignisse also einfach gezählt werden. Es entsteht damit ein Grauwertbild, in dem die Helligkeit mit der Anzahl Ereignisse korrespondiert. Ein solches Grauwertbild kann beispielsweise mit einem Verfahren des maschinellen Lernens, insbesondere einem neuronalen Netz ausgewertet werden, ob eine Störstelle 17 vorhanden ist. Alternativ können herkömmliche Bildauswertungen eingesetzt werden. Nach der Korrektur ist, wie erläutert, der durch eine Störstelle 17 erzeugte Grauwert ausgeprägt genug, um dies vor dem ansonsten homogenen und nur durch Rauschen geprägten Hintergrund verlässlich zu unterscheiden.

Es gibt alternative Möglichkeiten, die korrigierten Ereignisse in einem Bild zu sammeln. So ist denkbar, Ereignisse unter Berücksichtigung des Vorzeichens der Polarität aufzusummieren, so dass positive und negative Ereignisse einander auslöschen. Es ist auch denkbar, eine absolute Anzahl und eine unter Berücksichtigung des Vorzeichens gebildete Summe voneinander abzuziehen, wodurch sich zeigt, an welchen Stellen im Bild besonders viele Ereignisse einander ausgelöscht haben. So etwas spricht beispielsweise für ein instabiles oder unzuverlässiges Bildmerkmal. Denkbar ist weiterhin ein Bild aus nur positiven Ereignissen und/oder aus nur negativen Ereignissen. Die Polarität ermöglicht somit, in dem Bild wahlweise verschiedene Aspekte hervorzuheben, die für eine nachgelagerte Störstellenerkennung wichtig werden können.

Das Zeitintervall, in dem Ereignisse für ein jeweiliges Bild gesammelt werden, ist grundsätzlich ein freier Parameter. Eine bevorzugte Obergrenze ist die Zeit, die ein Objekt zum Durchlaufen des Sichtfeldes 18 benötigt. Es sind aber auch Bruchteile davon denkbar, beispielsweise um sich auf bestimmte Teilbereiche oder Objekte zu konzentrieren oder um zwei oder mehr aufeinanderfolgende Aufnahmen je Durchlaufzeit eines Objekts zu erzeugen. Solche Teilbereiche können beispielsweise verschiedene Beleuchtungszonen sein, die weiter unten im Zusammenhang mit Figur 4 noch näher erläutert werden. In Bewegungsrichtung weist der Bildsensor 20 insgesamt N Pixel für das gesamte Sichtfeld 18 oder einen entsprechenden Bruchteil für einen Teilbereich auf. Die oben schon diskutierte Geschwindigkeit der Bewegung in Pixel/s muss demnach lediglich mit N multipliziert werden, um herauszufinden, wie lange Ereignisse für ein Bild gesammelt werden. Vorzugsweise erfolgt die Auswertung rollierend, d.h. es wird jeweils ein neues Bild erzeugt und ausgewertet, wenn sich das Objekt 14 einen oder auch mehrere Pixel weiterbewegt hat, wobei entsprechend die ältesten Ereignisse herausfallen. Der Dynamikbereich des Bildes, also die möglichen Grauwerte, entspricht N, da jede Kante einer Störstelle 17 in jedem Pixelelement höchstens einmal ein Ereignis auslöst.

Figur 4 zeigt eine schematische Darstellung zur Erläuterung einer Beleuchtung mit mehreren Beleuchtungseinheiten oder Beleuchtungsmodulen 28a-b, wobei rein beispielhaft nur zwei Beleuchtungsmodule 28a-b gezeigt sind. Die mehreren Beleuchtungsmodule 28a-b ermöglichen die Erzeugung unterschiedlicher Beleuchtungszonen 30a-b. Dabei werden vorzugsweise Ereignisse in dem auszuwertenden Bild innerhalb einer Beleuchtungszone 30a-b gesammelt. Alternativ ist denkbar, Ereignisse auch über Grenzen von Beleuchtungszonen 30a-b hinweg zu sammeln, was zu einem Mittelungseffekt führt. Durch Variation der Anordnung und der Eigenschaften der Beleuchtungsmodule 28a-b sind verschiedenste Beleuchtungsszenarien umsetzbar, die sich beispielsweise spektral, also in der Farbe, in der Polarisation, im Einfallswinkel, im Profil oder Beleuchtungsmuster, wie Linie, Punkte, Gitter, homogen und vieles mehr, sowie in der Intensität oder deren Zeitverhalten unterscheiden, wie Modulation oder Gradienten. Somit können Dunkelfeld, Durchsicht, Drauflicht und andere Techniken abgebildet werden, die eine Vielzahl von unterschiedlichen Störstellen 17 sichtbar machen. Eine Polarisation ist insbesondere relativ zum Empfangspfad zu verstehen, d.h. vorzugsweise ist im Falle einer polarisierten Beleuchtung auch dem Bildsensor 20 ein Polfilter zugeordnet. Insbesondere kann unter gekreuzter Polarisation detektiert werden, also mit einer Beleuchtung, deren Polarisationsrichtung anders ist als diejenige eines Polfilters im Empfangspfad, noch bevorzugter senkrecht zueinander. Die mehreren Beleuchtungsszenarien erhöhen die Wahrscheinlichkeit erheblich, dass eine Störstelle 17 tatsächlich detektiert werden kann. Die unterschiedlichen Beleuchtungsszenarien können gleichzeitig verwirklicht werden. Das ist ein großer Vorteil gegenüber einer herkömmlichen Zeilenkamera, die Beleuchtungen allenfalls nacheinander variieren könnte, womit sich die Anforderungen an deren Aufnahmefrequenz nochmals erhöhen würde. Wie schon einleitend diskutiert, kommt nur eine Zeilenkamera überhaupt in Betracht, da eine herkömmliche Matrixkamera eine viel zu geringe Aufnahmefrequenz aufweist.

## Patentansprüche

1. Verfahren zur Erkennung von Störstellen (17) auf einer homogenen Fläche (16) eines Objekts (14), insbesondere einer Folie, während einer Bewegung des Objekts (14), wobei ein Bild der homogenen Fläche (16) aufgenommen und das Bild ausgewertet wird, ob es Störstellen (17) aufweist,
**dadurch gekennzeichnet,**
**dass** das Bild mit einem ereignisbasierten Bildsensor (20) aufgenommen wird, der mit einer Vielzahl von Pixelelementen Ereignisse einer sich verändernden Intensität erfasst, dass die Aufnahme über ein Zeitintervall erfolgt, innerhalb derer sich die homogene Fläche (16) über zumindest einige Pixelelemente des Bildsensors (20) weiterbewegt, dass die Ereignisse entsprechend einer seit einem Bezugszeitpunkt verstrichenen Zeit und der während der verstrichenen Zeit erfolgten Bewegung korrigiert werden und dass die korrigierten Ereignisse in einem Bild gesammelt werden, das dann hinsichtlich der Störstellen (17) ausgewertet wird.

2. Verfahren nach Anspruch 1,
wobei das Objekt (14) eine Folie zur Herstellung einer Batterie ist.

3. Verfahren nach Anspruch 2,
wobei das Objekt (14) eine Anodenfolie, eine Kathodenfolie oder eine Separatorfolie ist, insbesondere Anodenfolie, Kathodenfolie und/oder Separatorfolie während der Herstellung einer Batterie auf Störstellen (17) geprüft werden.

4. Verfahren nach einem der vorhergehenden Ansprüche,
wobei als Störstellen (17) Partikel bereits in der Größenordnung der Dicke einer Folie erkannt werden, insbesondere Partikel ab einem Durchmesser von höchstens der halben Dicke der Folie.

5. Verfahren nach einem der vorhergehenden Ansprüche,
wobei Unterseite und Oberseite der Folie aufgenommen und auf Störstellen (17) geprüft werden.

6. Verfahren nach einem der vorhergehenden Ansprüche,
wobei das Objekt (14) für das Aufnehmen des Bildes in mehreren Beleuchtungszonen (30a-b) unterschiedlich beleuchtet wird und wobei insbesondere korrigierte Ereignisse jeweils nur innerhalb einer selben Beleuchtungszone (30a-b) gesammelt werden.

7. Verfahren nach Anspruch 6,
wobei die Beleuchtungszonen (30a-b) sich voneinander in mindestens einer der folgenden Beleuchtungseigenschaften unterscheiden: Auflicht oder Durchlicht, Polarisation, Intensität, Spektrum, Einfallswinkel, Beleuchtungsmuster.

8. Verfahren nach einem der vorhergehenden Ansprüche,
wobei das Zeitintervall der Dauer entspricht, innerhalb derer sich die homogene Fläche (16) durch eine Beleuchtungszone (30a-b) oder das ganze Sichtfeld (18) des Bildsensors (20) bewegt
und/oder wobei die während des Zeitintervalls erfolgende Bewegung durch eine Parametrierung vorgegeben, mittels eines zusätzlichen Sensors gemessen oder aus den Ereignissen bestimmt wird.

9. Verfahren nach einem der vorhergehenden Ansprüche,
wobei sich das Objekt (14) nur in eine Richtung (12) bewegt, insbesondere gleichförmig.

10. Verfahren nach einem der vorhergehenden Ansprüche,
wobei die Ereignisse nach der Vorschrift *Xₙ = X - v* * *dT* korrigiert werden, mit X Position des das Ereignis auslösenden Pixelelements, *Xₙ* neue Position, *v* Geschwindigkeit der Bewegung und *dT* seit dem Bezugszeitpunkt verstrichene Zeit.

11. Verfahren nach einem der vorhergehenden Ansprüche,
wobei für die Korrektur entsprechend der seit einem Bezugszeitpunkt verstrichenen Zeit und der während der verstrichenen Zeit erfolgten Bewegung die Ereignisse selbst ausgewertet werden, ohne daraus zunächst ein Bild zusammenzusetzen, und erst abschließend nach der Korrektur die korrigierten Ereignisse in einem Bild gesammelt werden, das dann hinsichtlich der Störstellen (17) ausgewertet wird.

12. Verfahren nach einem der vorhergehenden Ansprüche,
wobei das Bild mit einem Verfahren des maschinellen Lernens, insbesondere einem neuronalen Netz ausgewertet wird, ob es Störstellen (17) aufweist.

13. Verfahren nach einem der vorhergehenden Ansprüche,
wobei ein Ereignis jeweils Koordinateninformationen des zugehörigen Pixelelements, eine Zeitinformation und/oder eine Intensitätsinformation aufweist.

14. Verfahren nach einem der vorhergehenden Ansprüche,
wobei der ereignisbasierte Bildsensor (20) Bildinformationen mit einer Aktualisierungsfrequenz von mindestens einem KHz oder sogar mindestens zehn KHz erzeugt
und/oder wobei ein jeweiliges Pixelelement feststellt, wenn sich die von dem Pixelelement erfasste Intensität ändert, und genau dann ein Ereignis erzeugt, wobei insbesondere das Ereignis eine differentielle Information aufweist, ob sich die Intensität verringert oder erhöht hat.

15. Kameravorrichtung (10) zur Erkennung von Störstellen (17) auf einer homogenen Fläche (16) eines Objekts (14), insbesondere einer Folie, während einer Bewegung des Objekts (14) relativ zu der Kameravorrichtung (10), die einen Bildsensor (20) zur Aufnahme eines Bildes der homogenen Fläche (16) sowie eine Steuer- und Auswertungseinheit (24) aufweist, die dafür ausgebildet ist, das Bild auszuwerten, ob es Störstellen (17) aufweist,
**dadurch gekennzeichnet,**
**dass** der Bildsensor (20) ein ereignisbasierter Bildsensor mit einer Vielzahl von Pixelelementen ist, die Ereignisse einer sich verändernden Intensität erfassen und dass die Steuer- und Auswertungseinheit (24) dafür ausgebildet ist, Ereignisse über ein Zeitintervall aufzunehmen, innerhalb derer sich die homogene Fläche (16) über zumindest einige Pixelelemente des Bildsensors (20) weiterbewegt, die Ereignisse entsprechend einer seit einem Bezugszeitpunkt verstrichenen Zeit und der während der verstrichenen Zeit erfolgten Bewegung zu korrigieren und die korrigierten Ereignisse in einem Bild zu sammeln, das dann hinsichtlich der Störstellen (17) ausgewertet wird.

## Claims

1. A method for recognizing defects (17) on a homogeneous surface (16) of an object (14), in particular a film, during a movement of the object (14), wherein an image of the homogeneous surface (16) is recorded and the image is evaluated as to whether it has defects (17),
**characterized in that**
the image is recorded by an event-based image sensor (20) which detects events of a changing intensity with a plurality of pixel elements; **in that** the recording takes place over a time interval within which the homogeneous surface (16) moves on over at least some pixel elements of the image sensor (20); **in that** the events are corrected in accordance with a time that has elapsed since a reference point in time and the movement that has taken place during the elapsed time; and **in that** the corrected events are collected in an image which is then evaluated with respect to the defects (17).

2. A method in accordance with claim 1,
wherein the object (14) is a film for manufacturing a battery.

3. A method in accordance with claim 2,
wherein the object (14) is an anode film, a cathode film, or a separator film, wherein in particular the anode film, cathode film, and/or separator film are checked for defects (17) during the manufacture of a battery.

4. A method in accordance with any one of the preceding claims,
wherein particles in the order of magnitude of the thickness of a film, in particular particles from a diameter onward of at most half the thickness of the film, are already recognized as defects (17).

5. A method in accordance with any one of the preceding claims,
wherein the lower side and the upper side of the film are recorded and checked for defects (17).

6. A method in accordance with any one of the preceding claims,
wherein the object (14) is differently illuminated for the recording of the image in a plurality of illumination zones (30a-b); and wherein in particular corrected events are respectively collected only within the same illumination zone (30a-b).

7. A method in accordance with claim 6,
wherein the illumination zones (30a-b) differ from one another in at least one of the following illumination properties: reflected light or transmitted light, polarization, intensity, spectrum, angle of incidence, illumination pattern.

8. A method in accordance with any one of the preceding claims,
wherein the time interval corresponds to the time duration within which the homogeneous surface (16) is moved through an illumination zone (30a-b) or through the whole field of view (18) of the image sensor (20);
and/or wherein the movement taking place during the time interval is specified by a parameterization, measured by means of an additional sensor, or determined from the events.

9. A method in accordance with any one of the preceding claims,
wherein the object (14) only moves in one direction (12), in particular uniformly.

10. A method in accordance with any one of the preceding claims,
wherein the events are corrected in accordance with the specification *Xₙ = X - v* * *dT,* where *X* is the position of the pixel element triggering the event, *Xₙ* is the new position, *v* is the speed of the movement, and *dT* is the time elapsed since the reference point in time.

11. A method in accordance with any one of the preceding claims,
wherein the events themselves are evaluated for the correction corresponding to the time that has elapsed since a reference point in time and the movement that has taken place during the elapsed time, without first composing an image therefrom, and the corrected results are only finally collected in an image after the correction, the image then being evaluated with respect to the defects (17).

12. A method in accordance with any one of the preceding claims,
wherein the image is evaluated using a process of machine learning, in particular a neural network, as to whether it has defects (17).

13. A method in accordance with any one of the preceding claims,
wherein an event has respective coordinate information of the associated pixel element, time information, and/or intensity information.

14. A method in accordance with any one of the preceding claims,
wherein the event-based image sensor (20) generates image information having a refresh rate of at least one KHz or even at least ten KHz, and/or wherein a respective pixel element determines when the intensity detected by the pixel element changes and generates an event exactly then, with the event in particular having differential information whether the intensity has decreased or increased.

15. A camera device (10) for recognizing defects (17) on a homogeneous surface (16) of an object (14), in particular a film, during a movement of the object (14) relative to the camera device (10), that has an image sensor (20) for recording an image of the homogeneous surface (16) and has a control and evaluation unit (24) which is configured to evaluate the image as to whether it has defects (17),
**characterized in that**
the image sensor (20) is an event-based image sensor having a plurality of pixel elements which detect events of a changing intensity; and **in that** the control and evaluation unit (24) is configured to record events over a time interval within which the homogeneous surface (16) moves on over at least some pixel elements of the image sensor (20), to correct the events in accordance with a time that has elapsed since a reference point in time and the movement that has taken place during the elapsed time and to collect the corrected events in an image which is then evaluated with respect to the defects (17).

## Revendications

1. Procédé de détection de défauts (17) sur une surface homogène (16) d'un objet (14), en particulier d'un film, pendant le mouvement de l'objet (14), une image de la surface homogène (16) étant enregistrée et l'image étant évaluée pour déterminer si elle présente des défauts (17),
**caractérisé en ce que**
l'image est enregistrée à l'aide d'un capteur d'images (20) basé sur des événements qui capture, à l'aide d'une multitude d'éléments pixels, des événements consistant en des variations de l'intensité,
**en ce que** l'enregistrement s'effectue sur un intervalle de temps pendant lequel la surface homogène (16) continue de se déplacer sur au moins quelques-uns des éléments pixels du capteur d'images (20),
**en ce que** les événements sont corrigés en fonction du temps écoulé depuis un moment de référence et du mouvement effectué pendant le temps écoulé, et
**en ce que** les événements corrigés sont collectés dans une image qui est ensuite évaluée en ce qui concerne les défauts (17).

2. Procédé selon la revendication 1,
dans lequel l'objet (14) est un film destiné à la fabrication d'une batterie.

3. Procédé selon la revendication 2,
dans lequel l'objet (14) est un film d'anode, un film de cathode ou un film séparateur,
en particulier, le film d'anode, le film de cathode et/ou le film séparateur sont inspectés pendant la fabrication d'une batterie afin de détecter des défauts (17).

4. Procédé selon l'une des revendications précédentes,
dans lequel des particules dès l'ordre de grandeur de l'épaisseur d'un film sont détectées comme défauts (17), en particulier des particules dont le diamètre est au plus égal à la moitié de l'épaisseur du film.

5. Procédé selon l'une des revendications précédentes,
dans lequel la face inférieure et la face supérieure du film sont enregistrées et inspectées afin de détecter des défauts (17).

6. Procédé selon l'une des revendications précédentes,
dans lequel l'objet (14) est éclairé différemment dans plusieurs zones d'éclairage (30a-b) pour l'enregistrement de l'image, et
en particulier, les événements corrigés ne sont collectés respectivement qu'au sein d'une même zone d'éclairage (30a-b).

7. Procédé selon la revendication 6,
dans lequel les zones d'éclairage (30a-b) se distinguent les unes des autres par au moins l'une des caractéristiques d'éclairage suivantes : lumière incidente ou lumière transmise, polarisation, intensité, spectre, angle d'incidence, configuration d'éclairage.

8. Procédé selon l'une des revendications précédentes,
dans lequel l'intervalle de temps correspond à la durée pendant laquelle la surface homogène (16) se déplace à travers une zone d'éclairage (30a-b) ou à travers l'ensemble du champ de vision (18) du capteur d'images (20), et/ou
le mouvement effectué pendant l'intervalle de temps est prédéfini par un paramétrage, est mesuré à l'aide d'un capteur supplémentaire ou est déterminé à partir des événements.

9. Procédé selon l'une des revendications précédentes,
dans lequel l'objet (14) ne se déplace que dans une direction (12), en particulier de manière uniforme.

10. Procédé selon l'une des revendications précédentes,
dans lequel les événements sont corrigés selon la règle *Xₙ = X - v* * *dT,* où *X* est la position de l'élément pixel qui déclenche l'événement, *Xₙ* est la nouvelle position, *v* est la vitesse du mouvement et *dT* est le temps écoulé depuis le moment de référence.

11. Procédé selon l'une des revendications précédentes,
dans lequel, pour la correction en fonction du temps écoulé depuis un moment de référence et du mouvement effectué pendant le temps écoulé, les événements eux-mêmes sont évalués, sans composer d'abord une image à partir de ceux-ci, et ce n'est qu'après la correction que les événements corrigés sont collectés dans une image qui est ensuite évaluée en ce qui concerne les défauts (17).

12. Procédé selon l'une des revendications précédentes,
dans lequel l'image est évaluée à l'aide d'un procédé d'apprentissage automatique, en particulier à l'aide d'un réseau neuronal, afin de déterminer si elle présente des défauts (17).

13. Procédé selon l'une des revendications précédentes,
dans lequel un événement respectif comprend des informations de coordonnées de l'élément pixel associé, des informations de temps et/ou des informations d'intensité.

14. Procédé selon l'une des revendications précédentes,
dans lequel le capteur d'images (20) basé sur les événements génère des informations d'image avec une fréquence de mise à jour d'au moins 1 kHz ou même d'au moins 10 kHz,
et/ou un élément pixel respectif identifie une variation dans l'intensité capturée par l'élément pixel et génère un événement à ce moment précis, l'événement comprenant en particulier une information différentielle indiquant si l'intensité a diminué ou augmenté.

15. Dispositif de caméra (10) pour détecter des défauts (17) sur une surface homogène (16) d'un objet (14), en particulier d'un film, pendant un mouvement de l'objet (14) par rapport au dispositif de caméra (10), qui comprend un capteur d'images (20), destiné à enregistrer une image de la surface homogène (16), ainsi qu'une unité de commande et d'évaluation (24) conçue pour évaluer l'image afin de déterminer si elle présente des défauts (17), **caractérisé en ce que**
le capteur d'images (20) est un capteur d'images basé sur les événements, comportant une multitude d'éléments pixels qui capturent des événements consistant en des variations de l'intensité, et
**en ce que** l'unité de commande et d'évaluation (24) est conçue pour enregistrer des événements sur un intervalle de temps pendant lequel la surface homogène (16) continue de se déplacer sur au moins quelques-uns des éléments pixels du capteur d'images (20), pour corriger les événements en fonction du temps écoulé depuis un moment de référence et du mouvement effectué pendant le temps écoulé, et pour collecter les événements corrigés dans une image qui est ensuite évaluée en ce qui concerne les défauts (17).
